# FASCICULE DE BREVET EUROPEEN

(11) **EP 1 060 787 B1**
(45) Date de publication et mention de la délivrance du brevet: **06.05.2004**
(21) Numéro de dépôt: 00401699.4
(22) Date de dépôt: 15.06.2000
(51) Int. Cl.: B01J 8/00, B01J 8/22, C01G 43/00

(54) **Procédé et installation de mise en oeuvre d'une reaction chimique triphasique sous pression**
Verfahren und Vorrichtung zur Durchführung einer Dreiphasenreaktion unter Druck
Process and appatus to perform a three-phase chemical reaction under pressure

(30) Priorité: 17.06.1999 FR 9907678
(43) Date de publication de la demande: 20.12.2000
(73) Titulaire: COMPAGNIE GENERALE DES MATIERES NUCLEAIRES, 78140 Velizy Villacoublay (FR)
(72) Inventeur: Bilardello, Pietro, 92170 Vanves (FR); Durupt, Nicolas, 87100 Limoges (FR); Pontier, Renaud, 38200 Luzinay (FR)
(74) Mandataire: Poulin, Gérard

(56) Documents cités:
- GB-A- 238 303
- US-A- 3 759 669
- US-A- 5 274 163
- PATENT ABSTRACTS OF JAPAN vol. 010, no. 292 (C-376), 3 octobre 1986 (1986-10-03) & JP 61 108370 A (HITACHI LTD), 27 mai 1986 (1986-05-27)

## Description

### Domaine technique

L'invention concerne un procédé et une installation conçus pour mettre en oeuvre une réaction chimique triphasique sous pression, telle qu'une réaction de réduction d'un produit liquide par un agent réducteur gazeux, en présence d'un catalyseur solide.

L'invention peut s'appliquer dans tous les cas où une réaction chimique quelconque met en présence une phase gazeuse et deux phases non gazeuses, dont l'une au moins est liquide. Selon le cas, l'autre phase non gazeuse est soit solide, soit également liquide.

Une application privilégiée concerne la réaction de réduction du nitrate d'uranyle en nitrate. uraneux, dans laquelle l'agent réducteur est de l'hydrogène sous pression et le catalyseur est constitué par du platine sur un support en silice.

### Etat de la technique

Les réactions triphasiques, telles que les réactions de réduction qui s'effectuent en présence d'un catalyseur, sont mises en oeuvre dans des réacteurs chimiques. Dans la plupart des cas, on utilise des réacteurs à lit fixe, des réacteurs à agitation mécanique, ou des réacteurs à lit fluidisé.

Dans les réacteurs à lit fixe, le produit liquide à traiter et l'agent réducteur gazeux circulent à co-courant ou à contre-courant vers le haut dans le réacteur, en traversant le catalyseur solide, celui-ci étant retenu de façon fixe, à un niveau déterminé du réacteur.

Dans les réacteurs à agitation mécanique comme dans les réacteurs à lit fluidisé, le catalyseur solide est en suspension au sein de la phase liquide, à l'intérieur du réacteur.

Dans le cas des réacteurs à agitation mécanique, la suspension du catalyseur solide est assurée par un brassage mécanique des différentes phases en présence à l'intérieur du réacteur.

Dans le cas des réacteurs à lit fluidisé, c'est le déplacement du fluide (liquide ou gazeux) qui crée la mise en suspension du catalyseur solide, au-delà d'un certain seuil de vitesse.

Certaines réactions chimiques triphasique se caractérisent - par des conditions opératoires particulières telles que la présence d'une phase gazeuse sous pression et le caractère fortement exothermique de la réaction. La réaction de réduction du nitrate d'uranyle en nitrate uraneux appartient à cette catégorie. Ainsi, la pression d'hydrogène est comprise de préférence entre environ 30 bars et environ 60 bars. Par ailleurs, la réaction produit 33 kcal/mole d'uranium converti, alors qu'il est souhaitable de se situer de préférence entre environ 10°C et environ 20°C pour éviter les réactions parasites.

Actuellement, ce type de réaction utilisant un gaz réducteur sous pression est mis en oeuvre industriellement dans des réacteurs à lit fixe. Toutefois, cette technologie présente un certain nombre d'inconvénients.

Ainsi, les réacteurs à lit fixe présentent une perte de charge importante, du fait que le liquide doit traverser le lit de catalyseur et l'élément fritté. Ce phénomène, qui impose de soumettre le catalyseur à une pression élevée, favorise le décollement de sa partie active par rapport à son support, par attrition. Il en découle des risques de corrosion des soudures du corps du réacteur et de l'élément fritté, qui risque également d'être obstrué par les fines particules décollées. Afin de prévenir ces risques, il est nécessaire de changer régulièrement l'élément fritté retenant le catalyseur (par exemple, toutes les 300 heures) ainsi que le corps du réacteur (par exemple, une fois par an).

Par ailleurs, le fonctionnement d'un tel réacteur implique un gradient de température entre la partie haute chaude et la partie basse froide. Le contrôle de la température du milieu, nécessaire afin d'éviter les réactions parasites lorsque la réaction de réduction est fortement exothermique, nécessite d'avoir recours à un nombre relativement important de capteurs de température (par exemple, cinq). En effet, la présence de points chauds (fréquents dans les réacteurs à lit fixe), liés à des différences de réactivité, est difficilement décelable.

En outre, dans les réacteurs à lit fixe, la baisse d'activité du catalyseur nécessite un renouvellement régulier de celui-ci (par exemple, une fois par an).

Si, les produits traités sont dangereux ou radioactifs, le remplacement des pièces mobiles en contact avec ces produits nécessite d'effectuer une intervention complexe pour garantir la sécurité.

Parmi les autres réacteurs utilisés actuellement pour effectuer des réactions triphasiques, les réacteurs à agitation mécanique assurent un très bon contact entre les phases. Cependant, ils favorisent l'attrition du catalyseur solide. De plus, ils ont pour inconvénients une consommation énergétique élevée et des problèmes d'étanchéité dus à la présence de pièces mobiles traversant les parois.

Par ailleurs, les réacteurs à lit fluidisé restent généralement limités en ce qui concerne les transferts de matières et de chaleur, ce qui peut poser des problèmes délicats dans le cas d'une réaction fortement exothermique. De plus, le débit d'alimentation de la phase liquide est plafonné à des valeurs relativement faibles.

Par ailleurs, on connaît des réacteurs de type "gazosiphon", qui comprennent une région centrale, appelée "riser" et une région annulaire appelée "downcomer", séparées par une cloison cylindrique. Dans ces réacteurs, une boucle de recirculation liquide est créée en injectant un gaz dans la partie basse de la région centrale, de façon à assurer une circulation ascendante dans cette région centrale et une circulation descendante dans la région annulaire.

Actuellement, les réacteurs de ce type ne sont utilisés industriellement que dans des domaines très spécifiques qui sont le traitement des eaux résiduelles, les fermentations en aérobie (domaine agro-alimentaire) et la croissance de micro-organisme (domaine pharmaceutique). Ces appareils fonctionnent à pression atmosphérique ou sous pression modérée (inférieure à 5 bars).

Selon US-A-5 274 163, un tel réacteur est aussi utilisable pour effectuer des réactions sous haute pression.

### Exposé de l'invention

L'invention a précisément pour objet un procédé et une installation conçus pour mettre en oeuvre une réaction triphasique sous pression en supprimant tous les inconvénients des techniques utilisées jusqu'à présent à cet effet et notamment en exigeant une maintenance réduite, en permettant un contrôle simplifié de la réaction et en autorisant une automatisation du chargement, de la vidange et de la régénération du catalyseur, lorsqu'il existe.

A cet effet, il est proposé un procédé de mise en oeuvre d'une réaction chimique triphasique sous pression, impliquant une phase gazeuse et deux phases non gazeuses, dont l'une au moins est liquide, caractérisé en ce qu'il comprend les étapes suivantes :
- mise en circulation, en boucle fermée et à co-courant, des deux phases non gazeuses, dans un réacteur, par injection de la phase gazeuse dans le bas d'une région centrale du réacteur, de façon à créer une circulation ascendante dans ladite région centrale et descendante dans une région annulaire du réacteur, séparée de la région centrale par une cloison cylindrique ;
- séparation et récupération, dans une région supérieure du réacteur, de la phase gazeuse en excès et d'une fraction liquide correspondant au débit d'alimentation en phase liquide ;
- acheminement séparé de la phase gazeuse en excès et de la fraction liquide dans un séparateur haute pression extérieur au réacteur ; et
- régulation de la pression dans le réacteur et du niveau dans le séparateur haute pression, par réglage d'un débit de gaz et d'un débit de liquide sortant du séparateur haute pression.

L'utilisation d'un réacteur de type gazosiphon associé à un séparateur haute pression permet de réguler de façon simple la pression et le niveau dans le réacteur, tout en bénéficiant des avantages procurés par ce type de réacteur.

De préférence, on récupère la fraction liquide dans la région supérieure du réacteur, par un piquage latéral placé derrière une paroi profilée infléchissant la circulation vers la région annulaire du réacteur et on filtre la fraction liquide des éventuelles traces d'une phase solide, telle qu'un catalyseur, entraîné à l'entrée de ce piquage.

Selon la réaction mise en oeuvre, on refroidit ou on chauffe les phases gazeuse et non gazeuse, à l'intérieur du réacteur.

Dans une application préférée de l'invention, on met en oeuvre une réaction de réduction sous pression d'un produit liquide par un agent réducteur gazeux, en présence d'un catalyseur solide.

De préférence, dans cette application préférée de l'invention, on régénère périodiquement le catalyseur solide à l'intérieur du réacteur, en mettant en oeuvre les étapes suivantes :
- vidange de la phase liquide ;
- remplissage du réacteur en eau ;
- barbotage à l'aide d'un gaz inerte, pendant un temps déterminé ;
- vidange de l'eau.

L'invention concerne notamment la réaction de réduction du nitrate d'uranyle par l'hydrogène, en présence de platine sur un support en silice.

L'invention a également pour objet une installation de mise en oeuvre d'une réaction chimique triphasique sous pression, impliquant une phase gazeuse et deux phases non gazeuses, dont l'une au moins est liquide, caractérisée en ce qu'elle comprend :
- un réacteur incluant une région centrale et une région annulaire, séparées par une cloison cylindrique, des moyens pour injecter la phase gazeuse dans le bas de la région centrale, pour créer une circulation en boucle fermée et à co-courant des deux phases non gazeuses, ascendante dans la région centrale et descendante dans la région annulaire ; ledit réacteur incluant de plus une région supérieure de séparation et de récupération de la phase gazeuse en excès et d'une fraction liquide correspondant au débit d'alimentation en phase liquide ;
- un séparateur haute pression extérieur au réacteur et relié à la région supérieure de celui-ci, afin d'acheminer séparément dans le séparateur la phase gazeuse en excès et la fraction liquide ; et
- des moyens de réglage d'un débit de gaz et d'un débit de liquide sortant du séparateur haute pression, afin de réguler la pression dans le réacteur et le niveau dans le séparateur haute pression.

### Brève description des dessins

On décrira à présent, à titre d'exemple non limitatif, un mode de réalisation préféré de l'invention, en se référant aux dessins annexés, dans lesquels :
- la figure 1 est une vue en coupe partielle qui représente schématiquement une installation conforme à l'invention ; et
- la figure 2 est une vue en coupe à plus grande échelle qui représente la région supérieure du réacteur de la figure 1.

### Description détaillée d'un mode de réalisation préféré de l'invention

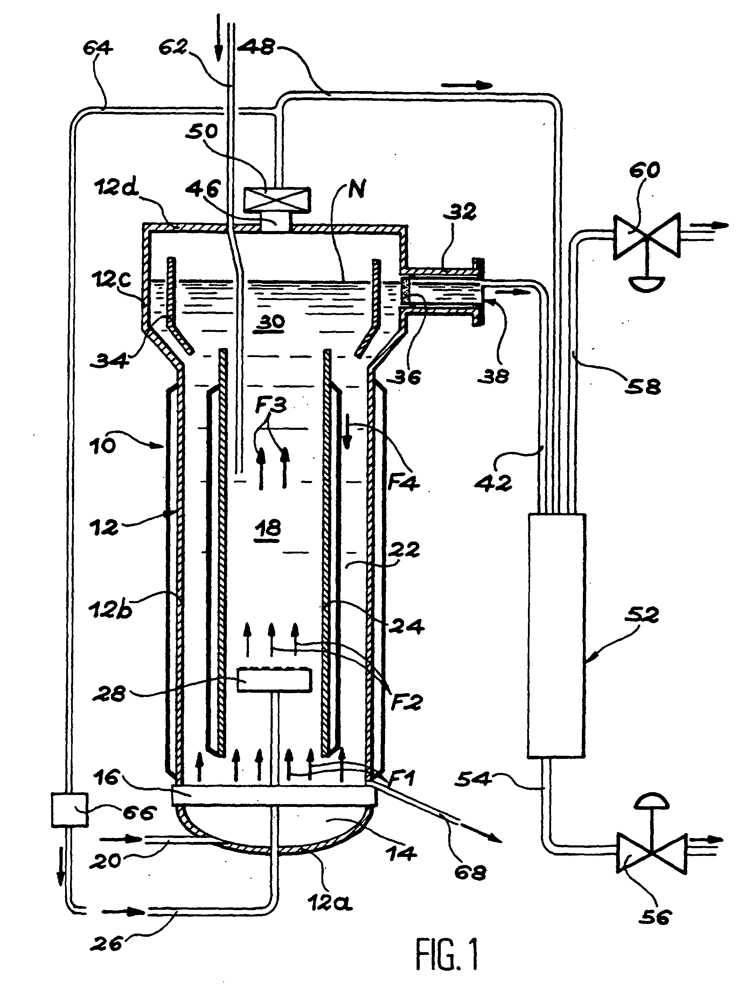

Sur la figure 1, on a représenté de façon très schématique les principaux composants d'une installation conçue pour mettre en oeuvre une réaction de réduction sous pression conformément à l'invention.

Cette installation comprend principalement un réacteur 10, de type gazosiphon. Le réacteur 10 inclut notamment une enveloppe extérieure 12 de forme sensiblement cylindrique, d'axe vertical. L'enveloppe 12 présente un fond bombé 12a, surmonté d'une partie cylindrique 12b de diamètre uniforme, qui s'évase en 12c dans la partie haute du réacteur, avant d'être fermée par une partie 12d sensiblement horizontale.

La région inférieure 14 du réacteur 10, délimitée à l'intérieur du fond bombé 12a, constitue une zone d'introduction de liquides. Cette zone est délimitée vers le haut par une plaque de répartition 16, telle qu'une cloison poreuse, une plaque perforée ou tout dispositif équivalent, apte à assurer une distribution uniforme du liquide vers le haut, dans une région centrale 18 du réacteur. L'injection du liquide dans la région inférieure 14 est assurée par au moins une canalisation 20 traversant le fond 12a.

La partie du réacteur 10 située au-dessus de la plaque de répartition 16 est délimitée extérieurement par la partie cylindrique 12b de diamètre uniforme de l'enveloppe 12. Elle comprend la région centrale 18 et une région annulaire 22 entourant cette région centrale et séparée de celle-ci par une cloison cylindrique 24, de diamètre uniforme, centrée sur l'axe vertical du réacteur. Le bord inférieur de la cloison cylindrique 24 est suffisamment espacé de la face supérieure de la plaque de répartition 16 pour permettre une recirculation des fluides. La plaque de répartition 16 peut être constituée d'éléments frittés permettant le passage du liquide et empêchant la fuite de particules de catalyseur vers la région inférieure 14.

Les gaz sont introduits dans le réacteur 10 par une canalisation 26 qui débouche vers le haut dans la partie basse de la région centrale 18, au travers d'un dispositif de répartition 28 tel qu'un pommeau, une couronne perforée ou un élément fritté. Les gaz issus du dispositif 28 et s'écoulant vers le haut dans la région centrale 18 sont illustrés par les flèches F2 sur la figure 1.

Le bord supérieur de la cloison cylindrique 24 est situé sensiblement au niveau du bas de la partie évasée 12c de l'enveloppe extérieure 12 du réacteur. La région supérieure 30 du réacteur située à l'intérieur de cette partie évasée 12c forme une zone de désengagement. C'est dans cette zone que s'effectuent la séparation des liquides et des gaz ainsi que la récupération séparée de chacun d'entre eux.

De façon plus précise, une fraction liquide est récupérée par un piquage latéral 32 qui débouche horizontalement dans la région supérieure 30, en dessous du niveau N du liquide dans cette zone.

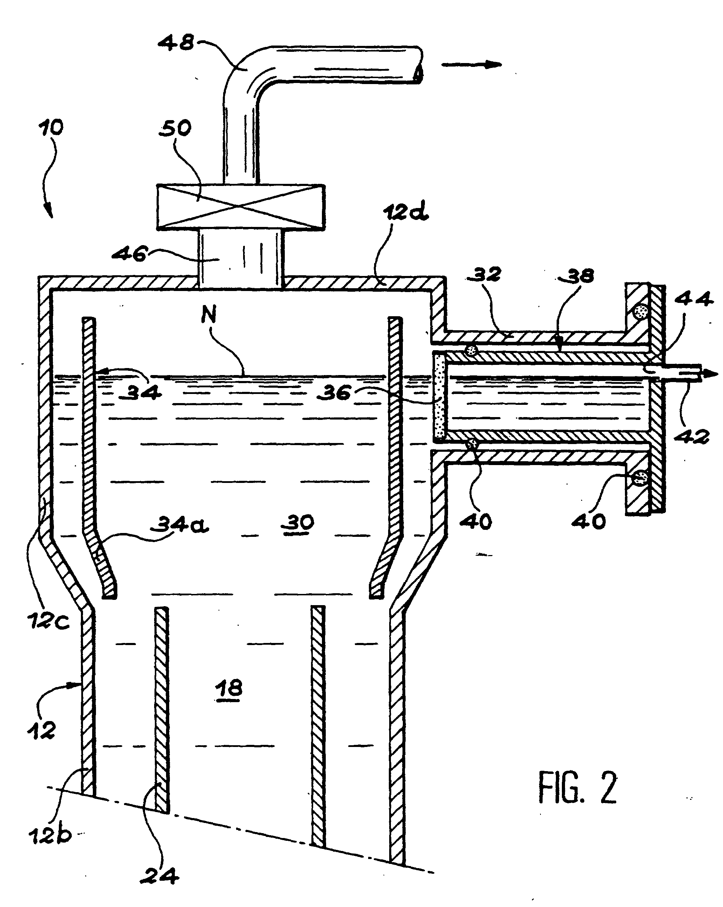

Comme l'illustre plus en détail la figure 2, le piquage latéral 32 débouche dans la région supérieure 30 derrière une paroi profilée 34. Cette paroi 34 est centrée sur l'axe vertical du réacteur et double intérieurement la partie supérieure évasée 12c de l'enveloppe extérieure 12, à distance de celle-ci et sur la majeure partie de sa hauteur. Ainsi, le bord supérieur de la paroi profilée 34 est espacé de la partie sensiblement horizontale 12d de l'enveloppe extérieure 12. Par ailleurs, la partie basse 34a de la paroi profilée 34 forme un entonnoir ou une trémie qui infléchit vers le bas la circulation du mélange liquide-solide arrivant dans la région supérieure 30, afin de faciliter un écoulement descendant de ce mélange dans la région annulaire 22.

Un filtre 36 destiné à retenir les particules de catalyseur solide, éventuellement entraînées, est placé à l'entrée du piquage latéral 32, au niveau de la partie supérieure évasée 12c de l'enveloppe 12 du réacteur. Comme l'illustre mieux la figure 2, ce filtre 36 est monté sur un support tubulaire amovible 38, normalement reçu de façon étanche dans le piquage latéral 32. L'étanchéité est assurée par exemple au moyen de joints d'étanchéité toriques 40. Les liquides captés par le piquage latéral 32 quittent le réacteur par une canalisation de trop plein 42, raccordée sur un trou 44 formé dans le support tubulaire 38. Le bas de ce trou 44 détermine le niveau N du liquide dans la région supérieure 30 du réacteur 10.

Par ailleurs, l'évacuation des gaz en excès, séparés des liquides dans la région supérieure 30, s'effectue par un piquage vers le haut 46 qui traverse la partie sensiblement horizontale 12d de l'enveloppe extérieure 12 du réacteur 10. Les gaz qui s'échappent du réacteur par le piquage 46 sont évacués par une canalisation 48 dont l'entrée peut être munie d'un dispositif de dévésiculage 50.

En se reportant à nouveau à la figure 1, on voit que l'installation comporte en outre, à l'extérieur du réacteur 10, un séparateur haute pression 52 dans lequel débouchent les canalisations 42 et 48 véhiculant respectivement les phases liquide et gazeuse issues du réacteur. Plus précisément, l'agencement relatif entre le piquage latéral 32 et le séparateur haute pression 52 est tel que les phases liquides sortant du réacteur 10 s'écoulent par gravité dans le séparateur.

Les phases liquides issus du séparateur haute pression 52 s'écoulent par gravité dans le fond de celui-ci, au travers d'une canalisation 54 contrôlée par une vanne 56.

Par ailleurs, les phases gazeuses issues du séparateur 52 s'écoulent de la partie supérieure de celui-ci par une canalisation 58 contrôlée par une vanne 60.

Cet agencement permet de contrôler efficacement la pression et le niveau dans le réacteur 10 et dans le séparateur haute pression 52, en agissant à la fois sur les vannes 56 et 60.

La mise en oeuvre de cette installation va à présent être décrite, dans le cadre de la réaction de réduction sous pression du nitrate uranyle en nitrate uraneux par l'hydrogène, en présence d'un catalyseur constitué par du platine sur un support en silice.

Le catalyseur est introduit dans le réacteur 10 par une conduite 62 débouchant vers le bas au travers de la partie sensiblement horizontale 12d de l'enveloppe 12 du réacteur, au-dessus de la région centrale 18.

On introduit également dans le réacteur en continu, par la canalisation 20, le liquide constitué par le nitrate d'uranyle à réduire mélangé à de l'acide nitrique, dans l'application considérée.

Par ailleurs, on injecte en continu l'hydrogène sous pression par la canalisation 26. Ce gaz a une triple fonction :
- assurer la pression dans l'installation ;
- assurer une bonne circulation du fluide à l'intérieur du réacteur ;
- assurer la réaction chimique.

Dans le cas de l'application décrite, la réaction chimique ne consomme qu'une faible fraction du gaz. Il est alors avantageux, comme on l'a illustré sur la figure 1, de recycler le gaz en excès par une canalisation 64, depuis un piquage situé sur la canalisation 48, à la sortie du réacteur 10, jusqu'à la canalisation 26 d'introduction des gaz, en passant par un dispositif de recirculation 66.

Le débit d'injection de l'hydrogène (flèches F1), qui dépend de la pression, est suffisant pour créer une circulation ascendante du liquide et du catalyseur solide dans la région centrale 18 du réacteur, comme l'illustrent les flèches F3 sur la figure 1. Il doit cependant être limité, pour éviter que la fraction liquide sortant du réacteur entraîne trop de particules solides risquant de colmater le filtre 36.

Lorsque le fluide ainsi mis en circulation dans la région centrale 18 parvient dans là région supérieure 30, la majeure partie du liquide ainsi que la totalité du catalyseur solide sont recyclées. Ils redescendent donc dans la région annulaire 22, comme l'illustre la flèche F4. La circulation en boucle fermée ainsi créée à l'intérieur du réacteur 10 favorise la réaction de réduction du nitrate d'uranyle en nitrate uraneux, du fait que le catalyseur solide est dispersé dans l'ensemble du réacteur.

Pour que la réaction de réduction s'effectue dans les meilleures conditions, il est important de maintenir la pression d'hydrogène à un niveau compris de préférence entre environ 30 bars et environ 60 bars. Le niveau N du liquide dans la région supérieure 30 est maintenu automatiquement au niveau de la canalisation de trop plein 42.

Conformément à l'invention, le maintien de la pression dans le réacteur 10 et du niveau dans le séparateur haute pression 52 est obtenu efficacement en agissant à la fois sur les vannes 56 et 60. La régulation ainsi effectuée permet de contrôler efficacement la pression dans le réacteur, du fait que les fluctuations des mesures de niveau et de pression sont atténuées dans le séparateur 52 par rapport au réacteur (les fluctuations de niveau et de pression dans le réacteur sont dues au bouillonnement provoqué par le gaz).

La réaction de réduction du nitrate d'uranyle est une réaction fortement exothermique. Afin d'éviter la survenance de réactions parasites, il est donc souhaitable de maintenir la température à l'intérieur du réacteur 10 à des niveaux compris de préférence entre environ 10°C et environ 20°C.

Ce résultat peut être obtenu aisément en équipant l'enveloppe extérieure 12 ainsi que la cloison cylindrique 24 de moyens de refroidissement. Ces moyens de refroidissement peuvent notamment inclure une circulation d'un fluide réfrigérant tel que de l'eau dans des structures à double enveloppe (figure 1).

Dans le cas de réactions autres que la réduction du nitrate d'uranyle, l'enveloppe extérieure 12 ainsi que la cloison cylindrique 24 peuvent aussi, à l'inverse, être équipées de moyens de chauffage du milieu réactionnel.

En cas de baisse d'activité du catalyseur, il est possible soit de vidanger automatiquement celui-ci par une canalisation de purge 68 débouchant juste au-dessus de la plaque de répartition 16, soit de procéder à une régénération du catalyseur à l'intérieur même du réacteur 10.

Dans ce dernier cas, la régénération est effectuée en vidangeant la totalité des liquides contenus dans le réacteur par une canalisation de vidange (non représentée) débouchant dans le fond du réacteur. Cette canalisation de vidange peut présenter une partie commune avec la canalisation 20 servant à introduire le liquide ou être totalement séparée de celle-ci.

Le réacteur est ensuite rempli d'eau. L'injection de l'eau s'effectue dans la région inférieure 14 du réacteur soit par la canalisation 20, soit une canalisation distincte.

On procède ensuite à un barbotage à l'aide d'un gaz inerte tel que de l'azote dans le cas de l'application considérée, pendant un temps déterminé. Le gaz est injecté dans le réacteur par la canalisation 26 et le dispositif 28. Ce temps peut être d'environ une demi-heure dans l'application considérée.

L'eau est ensuite vidangée et le réacteur peut être à nouveau mis en route.

En plus de ces avantages liés à la manipulation du catalyseur, l'installation décrite permet de simplifier grandement la maintenance ainsi que la conduite du réacteur.

En effet, du fait que le réacteur 10 est de type gazosiphon, le catalyseur est entraîné avec le liquide. Il n'est donc soumis à aucune pression mécanique. Aucune autre intervention que la régénération ou le remplacement du catalyseur n'est nécessaire.

Par ailleurs, l'utilisation d'un réacteur de type gazosiphon permet d'assurer une circulation en boucle fermée entre la région centrale 18 et la région annulaire 22. Cette circulation, induite par la différence de masse volumique des fluides entre ces deux parties, crée une bonne homogénéité thermique qui permet de contrôler la température du milieu de façon particulièrement simple, seulement grâce à deux capteurs.

Bien entendu, l'invention n'est pas limitée au mode de réalisation qui vient d'être décrit, mais en couvre toutes les variantes immédiatement accessibles à un homme du métier. En particulier, comme on l'a déjà mentionné, le procédé et l'installation selon l'invention peuvent être utilisés pour la mise en oeuvre de toute réaction chimique triphasique sous pression mettant en présence une phase gazeuse, une phase liquide et une troisième phase qui peut être, selon le cas, liquide ou solide. Ainsi, l'invention peut être utilisée, par exemple, pour mettre en oeuvre une réaction chimique liquide-liquide accélérée par un gaz vecteur, ou encore pour mettre en oeuvre une réaction d'oxydation d'un minerai, tel qu'un minerai d'uranium, en milieu acide, sous atmosphère d'oxygène.

## Revendications

1. Procédé de mise en oeuvre d'une réaction chimique triphasique sous pression, impliquant une phase gazeuse et deux phases non gazeuses, dont l'une au moins est liquide, **caractérisé en ce qu'**il comprend les étapes suivantes :
- mise en circulation, en boucle fermée et à co-courant, des deux phases non gazeuses, dans un réacteur (10), par injection de la phase gazeuse dans le bas d'une région centrale (18) du réacteur (10), de façon à créer une circulation ascendante dans ladite région centrale et descendante dans une région annulaire (22) du réacteur (10) séparée de la région centrale par une cloison cylindrique (24) ;
- séparation et récupération, dans une région supérieure (30) du réacteur, de la phase gazeuse en excès et d'une fraction liquide ;
- acheminement séparé de la phase gazeuse en excès et de la fraction liquide dans un séparateur haute pression (52) extérieur au réacteur (10) ; et
- régulation de la pression dans le réacteur (10) et du niveau dans le séparateur haute pression (52), par réglage d'un débit de gaz et d'un débit de liquide sortant du séparateur haute pression (52).

2. Procédé selon la revendication 1, dans lequel on récupère la fraction liquide dans ladite région supérieure, par un piquage latéral (32) placé derrière une paroi profilée (34) infléchissant la circulation vers la région annulaire (22) du réacteur (10), et on filtre la fraction liquide à l'entrée dudit piquage (32).

3. Procédé selon l'une quelconque des revendications 1 et 23, dans lequel on refroidit lesdites phases gazeuse et non gazeuse, à l'intérieur du réacteur (10).

4. Procédé selon l'une quelconque des revendications 1 et 2, dans lequel on chauffe lesdites phases gazeuse et non gazeuse, à l'intérieur du réacteur (10).

5. Procédé selon l'une quelconque des revendications précédentes, dans lequel on met en oeuvre une réaction de réduction sous pression d'un produit liquide par un agent réducteur gazeux, en présence d'un catalyseur solide.

6. Procédé selon la revendication 5, dans lequel on régénère périodiquement le catalyseur solide à l'intérieur du réacteur (10), en mettant en oeuvre les étapes suivantes :
- vidange de la phase liquide ;
- remplissage du réacteur (10) en eau ;
- barbotage à l'aide d'un gaz inerte, pendant un temps déterminé ;
- vidange de l'eau.

7. Procédé selon l'une quelconque des revendications 5 et 6, dans lequel la réaction de réduction mise en oeuvre est une réaction de réduction du nitrate d'uranyle par l'hydrogène, en présence de platine sur un support en silice.

8. Installation de mise en oeuvre d'une réaction chimique triphasique sous pression, impliquant une phase gazeuse et deux phases non gazeuses, dont l'une au moins est liquide, **caractérisée en ce qu'**elle comprend :
- un réacteur (10) incluant une région centrale (18) et une région annulaire (22), séparées par une cloison cylindrique (24), des moyens (26,28) pour injecter la phase gazeuse dans le bas de la région centrale (18), pour créer une circulation en boucle fermée et à co-courant des deux phases non gazeuses, ascendante dans la région centrale et descendante dans la région annulaire ; ledit réacteur (10) incluant de plus une région supérieure (30) de séparation et de récupération de la phase gazeuse en excès et d'une fraction liquide ;
- un séparateur haute pression (52) extérieur au réacteur (10) et relié à la région supérieure (30) de celui-ci, afin d'acheminer séparément dans le séparateur (52) la phase gazeuse en excès et la fraction liquide ; et
- des moyens de réglage (56,60) d'un débit de gaz et d'un débit de liquide sortant du séparateur haute pression, afin de réguler la pression dans le réacteur (10) et le niveau dans le séparateur haute pression (52).

9. Installation selon la revendication 8, dans laquelle un piquage latéral (32) de récupération de la fraction liquide débouche dans la région supérieure (30) du réacteur, derrière une paroi profilée (34) implantée dans ladite région supérieure de façon à infléchir la circulation vers ladite région annulaire (22) du réacteur, des moyens de filtrage (36) étant placés à l'entrée du piquage.

10. Installation selon l'une quelconque des revendications 8 et 9, dans laquelle des moyens de refroidissement équipent au moins la cloison cylindrique (24) du réacteur (10).

11. Installation selon l'une quelconque des revendications 8 et 9, dans laquelle des moyens de chauffage équipent au moins la cloison cylindrique (24) du réacteur (10).

## Patentansprüche

1. Verfahren zur Durchführung einer chemischen Dreiphasenreaktion unter Druck, an der eine gasförmige Phase und zwei nicht-gasförmige Phasen beteiligt sind, von denen wenigstens eine flüssig ist, **dadurch gekennzeichnet, dass** es die folgenden Schritte umfasst:
- In-Zirkulation-Bringen der zwei nicht-gasförmigen Phasen in einem geschlossenen Kreislauf und im Gleichstrom in einem Reaktor (10) durch Injizieren der gasförmigen Phase in den unteren Teil eines Zentralbereichs (18) des Reaktors (10) derart, dass eine aufsteigende Zirkulation im Zentralbereich und eine absteigende Zirkulation in einem Ringbereich (22) des Reaktors (10) erzeugt wird, der durch eine Zylinderwand (24) vom Zentralbereich getrennt ist;
- Trennen und Wiedergewinnen der überschüssigen gasförmigen Phase sowie einer flüssigen Fraktion in einem oberen Bereich (30) des Reaktors;
- getrenntes Führen der überschüssigen gasförmigen Phase sowie der flüssigen Fraktion in einen Hochdruckseparator (52) außerhalb des Reaktors (10); und
- Regeln des Drucks im Reaktor (10) und des Pegels im Hochdruckseparator (52) durch Regelung einer aus dem Hochdruckseparator (52) austretenden Gasrate und Flüssigkeitsrate.

2. Verfahren nach Anspruch 1, bei dem man die flüssige Fraktion im oberen Bereich durch eine seitliche Abzweigung (32) wiedergewinnt, die hinter einer Profilwand (34) angeordnet ist, welche die Zirkulation zum Ringbereich (22) des Reaktors (10) umlenkt, und man die flüssige Fraktion am Eingang der Abzweigung (32) filtert.

3. Verfahren nach einem der Ansprüche 1 und 2, bei dem man die gasförmigen und nicht-gasförmigen Phasen innerhalb des Reaktors (10) kühlt.

4. Verfahren nach einem der Ansprüche 1 und 2, bei dem man die gasförmigen und nicht-gasförmigen Phasen innerhalb des Reaktors (10) heizt.

5. Verfahren nach einem der vorhergehenden Ansprüche, bei dem man eine Reaktion zur Reduktion eines flüssigen Produkts unter Druck durch ein gasförmiges Reduktionsmittel bei Anwesenheit eines festen Katalysators einsetzt.

6. Verfahren nach Anspruch 5, bei dem man den festen Katalysator innerhalb des Reaktors (10) periodisch regeneriert, indem man die folgenden Schritte durchführt:
- Ablassen der flüssigen Phase;
- Befüllen des Reaktors (10) mit Wasser;
- Durchspülen mittels eines Inertgases während einer vorbestimmten Zeitdauer;
- Ablassen des Wassers.

7. Verfahren nach einem der Ansprüche 5 und 6, bei dem die durchgeführte Reduktionsreaktion eine Reaktion zur Reduktion von Uranylnitrat mittels Wasserstoff bei Anwesenheit von Platin auf einem Silikatträger ist.

8. Anlage zur Durchführung einer chemischen Dreiphasenreaktion unter Druck, an der eine gasförmige Phase und zwei nicht-gasförmige Phasen beteiligt sind, von denen wenigstens eine flüssig ist, **dadurch gekennzeichnet, dass** sie umfasst:
- einen Reaktor (10), umfassend einen Zentralbereich (18) und einen Ringbereich (22), die durch eine Zylinderwand (24) getrennt sind, Mittel (26, 28) zum Injizieren der gasförmigen Phase in den unteren Teil des Zentralbereichs (18), um eine Zirkulation in einem geschlossenen Kreislauf und im Gleichstrom der zwei nicht-gasförmigen Phasen zu erzeugen, und zwar aufsteigend im Zentralbereich und absteigend im Ringbereich, wobei der Reaktor (10) ferner einen oberen Bereich (30) zum Trennen und Wiedergewinnen der überschüssigen gasförmigen Phase sowie einer flüssigen Fraktion enthält;
- einen Hochdruckseparator (52) außerhalb des Reaktors (10), der mit dem oberen Bereich (30) desselben verbunden ist, um die überschüssige gasförmige Phase und die flüssige Fraktion getrennt in den Separator (52) zu führen; und
- Mittel (56, 60) zum Regeln einer aus dem Hochdruckseparator austretenden Gasrate und Flüssigkeitsrate, um den Druck im Reaktor (10) sowie den Pegel im Hochdruckseparator (52) zu regeln.

9. Anlage nach Anspruch 8, bei der eine seitliche Abzweigung (32) zum Wiedergewinnen der flüssigen Fraktion in den oberen Bereich (30) des Reaktors hinter einer Profilwand (34) mündet, die im oberen Bereich derart angeordnet ist, dass sie die Zirkulation zum Ringbereich (22) des Reaktors umlenkt, wobei Filtermittel (36) am Eingang der Abzweigung angeordnet sind.

10. Anlage nach einem der Ansprüche 8 und 9, bei der wenigstens die Zylinderwand (24) des Reaktors (10) mit Kühlmitteln ausgestattet ist.

11. Anlage nach einem der Ansprüche 8 und 9, bei der wenigstens die Zylinderwand (24) des Reaktors (10) mit Heizmitteln ausgestattet ist.

## Claims

1. Method of carrying out a three phase chemical reaction under pressure that involves a gas phase and two non-gaseous phases, at least one of which is liquid, said method comprising the following steps:
- circulating, in a closed loop and co-currently, two non-gaseous phases, in a reactor (10), by injection of the gas phase into the bottom of a central region (18) of the reactor (10), in a way that creates an ascending circulation in said central region and a descending circulation in the annular region (22) of the reactor (10), separated from the central region by a cylindrical partition,
- separation and recovery, in an upper region (30) of the reactor, of the excess gas phase and a liquid fraction,
- separate routing of the excess gas phase and the liquid fraction into a high pressure separator (52) outside the reactor (10), and
- regulation of the pressure in the reactor (10) and the level in the high pressure separator (52), by adjustment of a gas flow rate and a liquid flow rate leaving the high pressure separator (52).

2. Method according to claim 1, in which the liquid fraction in said upper region is recovered through a lateral branch pipe (32) positioned behind a profiled wall (34) that inflects the circulation towards the annular region (22) of the reactor (10) and the liquid fraction is filtered at the inlet to said branch pipe (32).

3. Method according to either of the claims 1 and 2, in which said gaseous and non-gaseous phases are cooled inside the reactor (10).

4. Method according to either of the claims 1 and 2, in which said gaseous and non-gaseous phases are heated inside the reactor (10).

5. Method according to any one of the preceding claims, in which a reducing reaction is carried out on a liquid product under pressure using a gaseous reducing agent, in the presence of a solid catalyst.

6. Method according to claim 5, in which the solid catalyst is periodically regenerated inside the reactor (10), by carrying out the following steps:
- discharge of the liquid phase;
- filling the reactor (10) with water;
- sparging with an inert gas, for a specific time;
- emptying the water.

7. Method according to either of the claims 5 and 6, in which the reduction reaction carried out is the reduction of uranyl nitrate by hydrogen in the presence of platinum on a silica carrier.

8. Installation for carrying out a three phase chemical reaction under pressure, that involves a gaseous phase and two non-gaseous phases, at least one of which is liquid, said installation comprising:
- a reactor (10) including a central region (18) and an annular region (22), separated by a cylindrical partition (24), means (26, 28) for injecting the gaseous phase into the bottom of the central region, to create closed loop and co-current circulation of the two non-gaseous phases, ascending in the central region (18) and descending in the annular region; said reactor (10) further including an upper region (30) for the separation and recovery of the excess gas phase and a liquid fraction;
- a high pressure separator (52) outside the reactor (10) and connected to the upper region (30) of the reactor, so as to separately route the excess gas phase and the liquid fraction into the separator (52); and
- means (56, 60) of adjusting a gas flow rate and a liquid flow rate leaving the high pressure separator, so as to regulate the pressure in the reactor (10), and the level in the high pressure separator (52).

9. Installation according to claim 8, in which a lateral branch pipe (32) for recovering the liquid fraction emerges into the upper region (30) of the reactor, behind a profiled wall (34) installed in said upper region in such a way that the circulation is inflected towards said annular region (22) of the reactor, filtering means (36) being placed at the inlet to the branch pipe.

10. Installation according to either of the claims 8 and 9, in which cooling means are fitted at least to the cylindrical partition (24) of the reactor (10).

11. Installation according to either of the claims 8 and 9, in which heating means are fitted at least to the cylindrical partition (24) of the reactor (10).
